# EUROPÄISCHE PATENTSCHRIFT

(11) **EP 1 943 122 B1**
(45) Veröffentlichungstag und Bekanntmachung des Hinweises auf die Patenterteilung: **25.01.2012**
(21) Anmeldenummer: 06806349.4
(22) Anmeldetag: 18.10.2006
(51) Int. Cl.: B60K 20/06

(54) **FAHRZEUG**
VEHICLE
VEHICULE

(30) Priorität: 03.11.2005 DE 102005052492
(43) Veröffentlichungstag der Anmeldung: 16.07.2008
(73) Patentinhaber: Bayerische Motoren Werke Aktiengesellschaft, 80809 München (DE)
(72) Erfinder: KEINATH, Andreas, 80799 München (DE); LINDBERG, Thomas, 81541 München (DE); SCHWEIGERT, Manfred, 86842 Türkheim (DE); PELLETIER, Richard, Thousand Oaks, CA 91361 (US)
(74) Vertreter: Mayer-Martin, Christian
(86) Internationale Anmeldenummer: PCT/EP2006/010027
(87) Internationale Veröffentlichungsnummer: WO 2007/051523

(56) Entgegenhaltungen:
- EP-A2- 1 211 119
- WO-A-92/06860
- DE-A1- 4 311 852
- US-A1- 2003 230 161
- US-A1- 2004 084 291
- US-A1- 2005 098 417

## Beschreibung

Die Erfindung betrifft ein Fahrzeug mit Betätigungselementen für einen Gangwechsel und für eine Beschleunigung.

Ein solches Fahrzeug ist durch WO92/06860 bekannt.

Ein Fokus in der Kraftfahrzeugentwicklung liegt nach wie vor darin, die Verletzungsgefahr für die Insassen eines Fahrzeuges bei einem Unfall zu reduzieren.

Tests zeigten, dass insbesondere für den Fahrer das Lenkrad und die Pedale eine wesentliche Ursache von Verletzungen bei einem Unfall darstellen. Daher gibt es Bestrebungen, ein Fahrzeug zu schaffen, das diese Gefahrenquellen möglichst nicht mehr aufweist.

Außerdem sind automatische Geschwindigkeitssteuereinrichtungen bzw. automatische Abstandshalteeinrichtungen für Kraftfahrzeuge bekannt. Der Nachteil solcher automatischen Fahrerassistenzsysteme liegt allerdings darin, dass sie in besonderen Fahrsituationen die Geschwindigkeit bzw. den Abstand zum vorausfahrenden Fahrzeug nicht automatisch dem Fahrerwunsch entsprechend einstellen. In diesen Fällen ist dann ein schnelles Eingreifen des Fahrers zur Übersteuerung der automatischen Systeme erforderlich. Dieses Übersteuern durch den Fahrer erfordert bei bekannten Fahrzeugen von einem Fahrer, der sich beispielsweise schon mehrere Minuten auf die automatischen Systeme verlassen hat und eine entsprechend komfortable Sitzposition eingenommen hat, eine rasche und zielsichere Kraftausübung mit seinen Füßen auf Bremspedal oder Gaspedal.

Es stellte sich nun aber bei den der Erfindung zu Grunde liegenden Untersuchungen heraus, dass ein solches Übersteuern der automatischen Systeme durch den Fahrer mit seinen Füßen erstens für den Fahrer unkomfortabel ist und zweitens zu einer sicherheitskritischen Verzögerung führt, welche ihre Ursache in der Dauer für das Bewegen der Füße in Richtung Pedale und für ein zuverlässiges Auffinden der Pedale hat.

Der Erfindung liegt nun die Aufgabe zu Grunde, ein Fahrzeug anzugeben, das ohne Pedale komfortabel bedient werden kann.

Diese Aufgabe wird durch die Merkmale des Hauptanspruchs gelöst. Vorteilhafte Weiterbildungen der Erfindung sind dem abhängigen Anspruch zu entnehmen.

Die Erfindung basiert demnach auch auf dem Gedanken, ein Fahrzeug mit einer Vielzahl von am Lenkrad angeordneten Betätigungselementen auszustatten, die derart mit dem Motor zusammenwirken, dass eine Betätigung eines ersten Betätigungselementes eine positive Beschleunigung des Fahrzeugs auslöst, und die Betätigung eines zweiten Betätigungselementes eine negative Beschleunigung des Fahrzeugs auslöst.

Die Beschleunigung (positiv oder negativ) wird dabei vorzugsweise ohne Gangwechsel ausgelöst. Es liegt aber auch im Rahmen dieser Ausführungsvariante, wenn beim Betätigen eines Betätigungselementes zur Auslösung einer Beschleunigung des Fahrzeuges ohne Gangwechsel mittelbar, beispielsweise durch ein Automatikgetriebe, in manchen Fahrsituationen doch ein Gangwechsel ausgelöst wird.

Eine Beschleunigung des Fahrzeuges ohne Gangwechsel kann vorzugsweise je nach Ausführungsvariante ein "Gasgeben", ein "Gaswegnehmen" und/oder ein "Bremsen" umfassen oder dadurch definiert sein.

Durch eine Anordnung der Betätigungselemente am Lenkrad wird eine komfortable Bedienung des Fahrzeugs ermöglicht, bei der man ständig (beispielsweise beim Einsatz eines Automatikgetriebes) oder vorübergehend (beispielsweise bei einem Manualgetriebe) bzw. ganz oder teilweise auf Pedale verzichten kann.

Der Einsatz von vier Betätigungselementen, wobei die Betätigung eines dritten Betätigungselementes einen Gangwechsel nach unten (Zurückschalten) auslöst, und die Betätigung eines vierten Betätigungselementes einen Gangwechsel nach oben (Hochschalten) auslöst, ermöglicht die ständige oder temporäre (beispielsweise zum Zwecke der Übersteuerung automatischer Fahrerassistenzsysteme) Bedienung eines Fahrzeuges hinsichtlich Gangwechsel und Beschleunigung ohne Pedale.

Im Rahmen der Erfindung liegen selbstverständlich auch Fahrzeuge, die neben den genannten Betätigungselementen weitere Betätigungselemente, wie beispielsweise Pedale, Schaltwippen, Ganghebel etc., aufweisen. Durch die Erfindung wird lediglich ein Bedienkonzept für ein Fahrzeug angegeben, das alternativ oder, beispielsweise je nach Fahrsituation, ergänzend zu anderen Bedienkonzepten verwendet werden kann.

Besonders komfortabel und intuitiv wird die Bedienung durch den Einsatz von Hebeln als Betätigungselemente, die Hebel im Wesentlichen hinter dem Lenkrad angeordnet sind.

Durch eine Verbindung der Hebel mit dem Lenkrad derart, dass sie sich bei einer Bewegung des Lenkrades mitbewegen, ist gewährleistet, dass ein Gangwechsel und/oder eine Beschleunigung auch in einer Kurve bequem und sicher ausgelöst werden kann.

Die Hebel sind zur weiteren Erhöhung des Komforts und der Fahrsicherheit derart am Lenkrad angeordnet, dass sie mit am Lenkrad anliegenden Händen bedienbar sind.

Gemäß der Erfindung ist auf einer ersten Seite, beispielsweise links vom Zentrum des Lenkrades, der Hebel zur Auslösung einer negativen Beschleunigung und der Hebel zur Auslösung eines Gangwechsels nach unten angeordnet, und auf einer zweiten Seite, beispielsweise rechts vom Zentrum des Lenkrades, der Hebel zur Auslösung einer positiven Beschleunigung und der Hebel zur Auslösung eines Gangwechsels nach oben angeordnet. Diese Anordnung (linke Seite = Verzögern; rechte Seite = Beschleunigen) erwies sich in der Erfindung zu Grunde liegenden Tests als für den Fahrer leicht erlernbar und intuitiv bedienbar.

Als ebenfalls sehr zuverlässig und komfortabel in der Bedienung erwiesen sich in aufwändigen der Erfindung zu Grunde liegenden Tests folgende Hebel-Konfigurationen:
- Auslösen der Beschleunigung durch ein Ziehen des Hebels aus einer Ausgangsstellung in Richtung des Fahrers, und Auslösen eines Gangwechsels durch ein Drücken des Hebels aus einer Ausgangsstellung in Richtung weg vom Fahrer;
- Ausgestaltung eines Hebels zum Auslösen einer Beschleunigung derart, dass die Beschleunigung von der Auslenkung des Hebels aus einer Ausgangsstellung abhängt, und Ausgestaltung eines Hebels zum Auslösen eines Gangwechsels derart, dass ein Gangwechsel durch eine Auslenkung des Hebels aus einer Ausgangsstellung über einen Druckpunkt hinaus ausgelöst wird.

Besonders vorteilhaft ist eine Kombination erfindungsgemäßer Anordnungen von Betätigungselementen am Lenkrad mit einer so genannten Aktivlenkung, gemäß welcher der durch den Lenkradeinschlag ausgelöste Radeinschlag von einer Fahrsituation und/oder der aktuellen Geschwindigkeit des Fahrzeuges abhängt. Dadurch wird es möglich die Betätigungselemente am Lenkrad auch in Kurven zuverlässig und bequem zu betätigen. Vorzugsweise ist die Abhängigkeit zwischen Lenkradeinschlag und Radeinschlag derart eingestellt, dass der in der aktuellen Fahrsituation und/oder bei der aktuellen Geschwindigkeit erforderliche maximale Radeinschlag durch eine Rotation des Lenkrades um einen vorgegebenen Maximalwinkel erreicht wird. Der Maximalwinkel ist dabei je nach Ausführungsvariante der Erfindung kleiner als 90 Grad, kleiner als 100 Grad, kleiner als 110 Grad, kleiner als 120 Grad, kleiner als 130 Grad, kleiner als 140 Grad oder kleiner als 150 Grad. Je kleiner der Maximalausschlag ist, desto sicherer ist die Bedienung der Betätigungselemente auch in Kurven; je größer der maximale Lenkradeinschlag ist, desto genauer ist der gewünschte Radeinschlag einstellar.

Im Folgenden wird die Erfindung anhand von Beispielen unter Bezugnahme auf die folgenden Figuren näher erläutert:
- Figur 1:: Lenkrad samt zweier Hebel;
- Figur 2:: Bedienfeld für Fahrerassistenzsysteme.

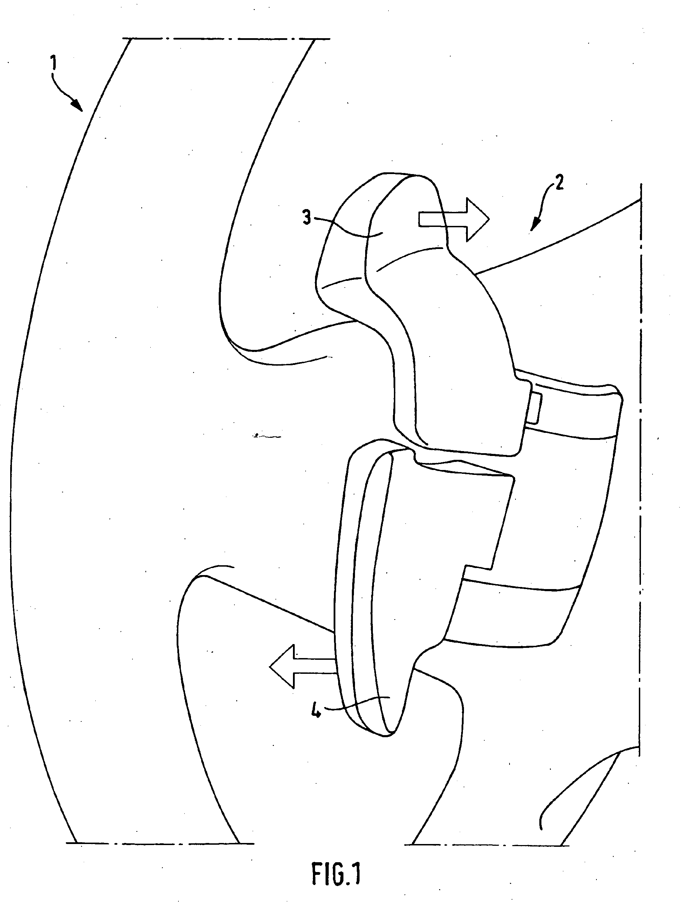

Figur 1 zeigt ein Lenkrad 1 eines Fahrzeuges, an dessen rechter Speiche 2 als Betätigungselemente zwei Hebel 3,4 ausgeführt sind. Die Hebel 3,4 sind hinter der Speiche 2 monostabil und federelastisch mit dem Lenkrad verbunden.

Dabei ist der obere Hebel 3 derart mechanisch mit dem Lenkrad 1, insbesondere mit der Speiche 2 des Lenkrades 1, und derart wirktechnisch mit dem Getriebe des Fahrzeuges verbunden, dass ein Drücken (angedeutet durch den Pfeil) des Hebels 3 aus der stabilen Ausgangslage über einen vorgegebenen Druckpunkt hinaus einen Gangwechsel, insbesondere ein Hochschalten, auslöst.

Der untere Hebel 4 ist derart mechanisch mit dem Lenkrad 1, insbesondere mit der Speiche 2 des Lenkrades 1, und derart wirktechnisch mit dem Motor des Fahrzeuges verbunden, dass ein Ziehen (angedeutet durch den Pfeil) des Hebels 4 aus der stabilen Ausgangslage eine Beschleunigung, insbesondere eine positive Beschleunigung, des Fahrzuges auslöst, die mit dem Grad der Abweichung des Hebels aus der Ausgangslage zunimmt. Die positive Beschleunigung kann insbesondere aus einem "Gasgeben" bzw. einer Erhöhung der Motordrehzahlen resultieren.

Eine entsprechende Anordnung von Hebeln löst auf der linken Seite des Lenkrades einen entsprechenden Gangwechsel nach unten und eine entsprechende negative Beschleunigung aus.

Dadurch wird eine Handschaltung und ein "Handgas" am Lenkrad realisiert, wodurch ganz oder zeitweise, beispielsweise fahrsituationsabhängig, auf Pedale oder die Verwendung vorhandener Pedale verzichtet werden kann.

Mithilfe der zusätzlichen Hebel kann beispielsweise ein automatisches Fahrerassistenzsystem temporär übersteuert werden, wenn das Fahrerassistenzsystem nicht dem Fahrerwunsch entsprechend funktioniert, beispielsweise beim schnellen Auffahren auf einen weit entfernten Vordermann (Fahrer kann manuell vorbremsen), bei einem einscherenden Fahrzeug (Fahrer kann manuell vorbremsen), beim Beschleunigen im Windschatten des Vordermanns, um zu überholen (Fahrer kann manuell beschleunigen), beim Auffahren auf eine Autobahn (Fahrer kann manuell auf dem Beschleunigungsstreifen beschleunigen) etc. Durch die Erfindung ist es möglich, die Füße in gut kontrollierbaren Situationen nicht benutzen zu müssen. Sie können dadurch in einer bequemen Stellung verharren. Darüber hinaus ist die Bedienung der Hebel mit mehreren Fingern haptisch angenehm und gut kontrollierbar.

Nach einer bevorzugten Ausführung ist die soeben erläuterte Lenk-Hebel-Konfiguration funktionell mit einer oben bereits erläuterten so genannten AktivLenkung kombiniert.

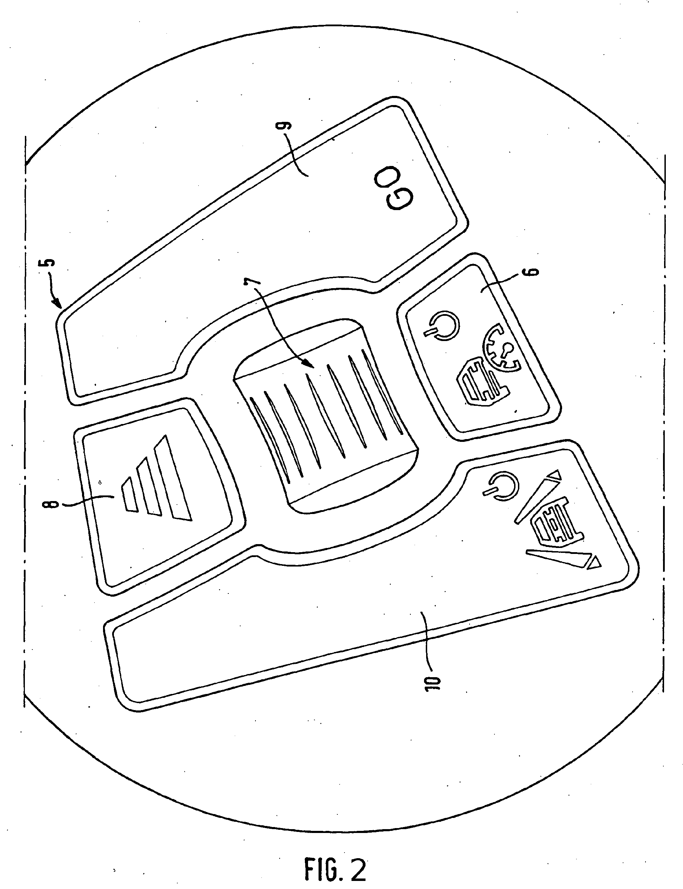

Figur 2 zeigt ein am Lenkrad, beispielsweise auf einer Lenkradspeiche, angeordnetes Bedienfeld 5 für ein Fahrerassistenzsystem, wie beispielsweise eine automatische Geschwindigkeitsteuerung mit automatischer Abstandhaltung zum vorausfahrenden Fahrzeug.

Das Bedienfeld ermöglicht die Bedienung folgender Funktionen:
- Ein- /Ausschalten des Fahrerassistenzsystems mit einem dedizierten Ein-/Ausschalter 6, der das Fahrerassistenzsystem an oder ausschaltet.
- Verändern der Wunschgeschwindigkeit mit einem Rändelrad 7. Dabei verstellt das Rändelrad 7 die Geschwindigkeit nach oben und unten in 5 km/h-Schritten, bei gleichzeitigem Drücken und Drehen des Rads in 1 km/h-Schritten.

- Verändern des Wunschabstandes zum vorraus fahrenden Fahrzeug durch Betätigen einer Abstandstaste 8, wobei die verschiedenen Abstandsstufen nacheinander durchgeschaltet werden.
- Durch die Taste GO 9 wird sowohl die Resume-Funktion (automatische Geschwindikeitssteuerung basierend auf der eingespeicherten Sollgeschwindigkeit fortsetzen) als auch die sogenannte "Go-Request" Funktion realisiert. Die "Go-Reqest" -Funktion wird dann vom Fahrer angefordert, wenn das Auto nach dem selbständigen Bremsen in den Stand (Ampel, Stau etc.) und einer gewissen Wartezeit nicht mehr von alleine anfährt. Der Fahrer muß dann den Befehl zum Anfahren geben, das Fahrzeug beschleunigt anschließend selbständig aus dem Stand bis hin zur gewünschten Sollgeschwindigkeit.
- Die Übernahme der vom Fahrer gefahrenen Momentangeschwindigkeit ist möglich, wenn die automatische Geschwindigkeitseinstellung bereits aktiv ist (Beispiel: Fahrer überholt Vorderfahrzeug, fährt schneller als Sollgeschwindigkeit und möchte die höhere Geschwindigkeit für die Weiterfahrt für die automatische Geschwindigkeitseinstellung übernehmen). Auch diese Funktion kann mit der GO-Taste 9 realisiert werden, wenn die automatische Geschwindigkeitseinstellung bereits aktiv ist.
- Ein Spurhalte-Asisstenzsystem, das ein Verleiben des Fahrzeuges auf der Straße bzw. Fahrspur unterstützt (Heading Control) wird durch die Taste 10 aktiviert und/oder deaktiviert.

Ein derartiges Bedienfeld ist leicht einsehbar und intuitiv erfassbar. Zudem ermöglicht es eine intuitive Bedienung der automatischen Geschwindigkeitseinstellung, da es keinerlei Doppelfunktionen vorsieht. Alle Bedienvorgänge sind durch separate Tasten aktivierbar. Trotzdem ist für jede Standard-Interaktion nur ein Bedienschritt nötig.

Ein nicht dargestelltes mit dem Bedienelement korrespondierendes Anzeigefeld weist eine Spurhalte-Assistenz-Anzeige auf, welche mittels einer stilisierten Rampe an Spurrändern auf die Aktivität der Funktion der Spurhalte-Assistenz optisch hinweist.

Dabei sind drei verschiedene Systemzustände der Spurhalteassistenz berücksichtig: "aus", "an aber nicht warnbereit" (Spur nicht erkannt) und "aktiv" (Spur erkannt und warnbereit).

Nach dem Einschalten des Spurhalteassistenz-Systems wird dem Fahrer- solange keine Spur erkannt werden kann - mithilfe der Rampe angezeigt, dass das Spurhalteassistenz-System aktiv aber nicht einsatzbereit ist. Die Anzeige besteht dabei nur aus den gelben Kantenlinien der Rampe; die Rampendarstellung ist nicht ausgefüllt. Sobald die Spur erkannt ist (System einsatzbereit), wird die Rampe zusätzlich orange, ausgefüllt. Der Fahrer kann also alle drei Zustände leicht unterscheiden.

Ein ebenfalls dargestelltes Auto bewegt sich perspektivisch vom Betrachter weg oder zu ihm hin, sobald ein anderer Abstand für die automatische Abstandshaltung eingestellt wird. Kommt es zur Übernahmeaufforderung, wird das Fahrzeug besonders nah am Betrachter gezeigt, um zu verdeutlichen, dass der Abstand zu klein ist.

Ein derartiges Bedienfeld ist leicht einsehbar und intuitiv erfassbar.

## Patentansprüche

1. Fahrzeug
- mit einem Motor,
- mit einem Lenkrad (1), und
- mit einer Vielzahl von am Lenkrad (1) angeordneten Betätigungselementen (3,4), die derart mit dem Motor zusammenwirken, dass eine Betätigung eines ersten Betätigungselementes (4) eine positive Beschleunigung des Fahrzeugs auslöst, und die Betätigung eines zweiten Betätigungselementes eine negative Beschleunigung des Fahrzeugs auslöst,
wobei die am Lenkrad (1) angeordneten Betätigungselemente (3,4) derart mit dem Getriebe und mit dem Motor zusammenwirken, dass die Betätigung eines dritten Betätigungselementes einen Gangwechsel nach unten auslöst, und die Betätigung eines vierten Betätigungselementes (4) einen Gangwechsel nach oben auslöst,
wobei die Betätigungselemente (3,4) als Hebel (3,4) ausgeführt sind, wobei die Hebel (3,4) im Wesentlichen hinter dem Lenkrad (1) angeordnet sind,
wobei die Hebel (3,4) derart mit dem Lenkrad (1) verbunden sind, dass sie sich bei einer Bewegung des Lenkrades (1) mitbewegen,
wobei die Hebel (3,4) derart am Lenkrad (1) angeordnet sind, dass sie mit am Lenkrad (1) anliegenden Händen bedienbar sind,
wobei auf einer ersten Seite des lenkrades der Hebel zur Auslösung einer negativen Beschleunigung und der Hebel zur Auslösung eines Gangwechsels nach unten angeordnet ist und auf einer zweiten Seite der Hebel (4) zur Auslösung einer positiven Beschleunigung und der Hebel (3) zur Auslösung eines Gangwechsels nach oben angeordnet ist,
wobei eine Beschleunigung durch ein Ziehen des Hebels (4) aus einer Ausgangsstellung in Richtung des Fahrers ausgelöst wird, und ein Gangwechsel durch ein Drücken des Hebels (3) aus einer Ausgangsstellung in Richtung weg vom Fahrer ausgelöst wird, und
wobei ein Hebel (4) zum Auslösen einer Beschleunigung derart ausgestaltet ist, dass die Beschleunigung von der Auslenkung des Hebels (4) aus einer Ausgangsstellung abhängt, und
wobei ein Hebel (3) zum Auslösen eines Gangwechsels derart ausgestaltet ist, dass ein Gangwechsel durch eine Auslenkung des Hebels (3) aus einer Ausgangsstellung über einen Druckpunkt hinaus ausgelöst wird.

2. Fahrzeug nach Anspruch 1,
bei dem der durch den Lenkradeinschlag ausgelöste Radeinschlag von einer Fahrsituation und/oder der aktuellen Geschwindigkeit des Fahrzeuges abhängt.

## Claims

1. A vehicle
- with an engine,
- with a steering wheel (1), and
- with a multiplicity of actuating elements (3, 4), which are arranged on the steering wheel (1) and cooperate with the engine in such a way that an actuation of a first actuating element (4) triggers a positive acceleration of the vehicle, and the actuation of a second actuating element triggers a negative acceleration of the vehicle, wherein the actuating elements (3, 4) arranged on the steering wheel (1) cooperate with the transmission and with the engine in such a way that the actuation of a third actuation element triggers a downward gear change and the actuation of a fourth actuating element (4) triggers an upward gear change, wherein the actuating elements (3, 4) are configured as levers (3, 4), wherein the levers (3, 4) are arranged substantially behind the steering wheel (1), wherein the levers (3, 4) are connected to the steering wheel (1) in such a way that when the steering wheel (1) moves they also move, wherein the levers (3, 4) are arranged on the steering wheel (1) in such a way that they can be operated by hands resting on the steering wheel (1), wherein the lever for triggering a negative acceleration and the lever for triggering a downward gear change are arranged on a first side of the steering wheel and the lever (4) for triggering a positive acceleration and the lever (3) for triggering an upward gear change are arranged on a second side, wherein an acceleration is triggered by pulling the lever (4) from a starting position in the direction of the driver, and a gear change is triggered by pressing the lever (3) from a starting position in the direction away from the driver, and wherein a lever (4) for triggering an acceleration is configured in such a way that the acceleration depends on the deflection of the lever (4) from a starting position, and wherein a lever (3) to trigger a gear change is configured in such a way that a gear change is triggered by a deflection of the lever (3) from a starting position beyond a pressure point.

2. A vehicle according to claim 1, wherein the wheel steering angle triggered by the steering wheel angle depends on a driving situation and/or the current speed of the vehicle.

## Revendications

1. Véhicule comportant :
- un moteur,
- un volant (1), et
- un ensemble d'éléments d'actionnement (3, 4) installés sur le volant (1) et coopérant avec le moteur pour qu'un actionnement d'un premier élément d'actionnement (4) déclenche une accélération positive du véhicule et que l'actionnement d'un second élément d'actionnement déclenche une accélération négative du véhicule,
dans lequel
- les éléments d'actionnement (3, 4) installés sur le volant (1) coopèrent avec la transmission et avec le moteur pour que l'actionnement d'un troisième élément d'actionnement déclenche une descente de rapport de vitesses et que l'actionnement d'un quatrième élément d'actionnement (4) déclenche une montée de rapport de vitesses,
- les éléments d'actionnement (3, 4) sont réalisés sous la forme de levier (3, 4),
- les leviers (3, 4) sont installés pratiquement derrière le volant (1),
- les leviers (3, 4) sont reliés au volant (1) pour se déplacer avec le mouvement du volant (1),
- les leviers (3, 4) sont installés sur le volant (1) pour pouvoir être actionnés avec les mains sur le volant (1),
- sur un premier côté du volant, se trouve le levier de déclenchement d'une accélération négative et le levier de déclenchement d'une descente de rapport de vitesses et sur le second côté, se trouvent le levier (4) pour déclencher une accélération positive et le levier (3) pour déclencher une montée de rapport de vitesses,
- une accélération étant déclenchée en tirant le levier (4) de sa position de repos en direction du conducteur et un changement de rapport est déclenché par l'enfoncement du levier (3) à partir de sa position de sortie en direction s'écartant du conducteur, et
- un levier (4) pour déclencher une accélération est conçu pour que l'accélération dépende du débattement du levier (4) à partir de sa position de sortie, et
- un levier (3) pour déclencher un changement de rapport de vitesses et conçu pour déclencher le rapport de vitesses en faisant passer le levier (3) de sa position de sortie par-dessus un point de poussée.

2. Véhicule selon la revendication 1,
**caractérisé en ce que**
le braquage des roues déclenché par le braquage du volant, dépend de la situation de conduite et/ou de la vitesse actuelle du véhicule.
